# EUROPEAN PATENT SPECIFICATION

(11) **EP 3 403 288 B1**
(45) Date of publication and mention of the grant of the patent: **19.06.2024**
(21) Application number: 17702191.2
(22) Date of filing: 10.01.2017
(51) Int. Cl.: H01M 10/04, H01M 10/0525

(54) **LITHIUM ION BATTERY AND METHOD OF MANUFACTURING**
LITHIUM-IONEN-BATTERIE UND VERFAHREN ZUR HERSTELLUNG
BATTERIE AU LITHIUM-ION ET PROCÉDÉ DE FABRICATION

(30) Priority: 11.01.2016 US 201614992993; 11.01.2016 US 201614993003
(43) Date of publication of application: 21.11.2018
(73) Proprietor: Dreamweaver International, Inc., Greenville, SC 29615 (US)
(72) Inventor: MORIN, Brian G., South Carolina 29615 (US)
(74) Representative: Tomkinson, Alexandra
(86) International application number: PCT/US2017/012797
(87) International publication number: WO 2017/123519

(56) References cited:
- US-A1- 2014 134 496
- US-A1- 2014 141 336
- US-A1- 2014 141 337
- ZHANG ET AL: "The effect of the charging protocol on the cycle life of a Li-ion battery", JOURNAL OF POWER SOURCES, ELSEVIER SA, CH, vol. 161, no. 2, 27 October 2006 (2006-10-27), pages 1385-1391, XP027938700, ISSN: 0378-7753 [retrieved on 2006-10-27]
- VERMA P ET AL: "A review of the features and analyses of the solid electrolyte interphase in Li-ion batteries", ELECTROCHIMICA ACTA, ELSEVIER SCIENCE PUBLISHERS, BARKING, GB, vol. 55, no. 22, 1 September 2010 (2010-09-01), pages 6332-6341, XP027215821, ISSN: 0013-4686 [retrieved on 2010-06-01]

## Description

### TECHNICAL FIELD

The present invention relates to the method of producing a lithium ion battery comprising an insulating (nonconductive) micoporous polymeric battery separator comprised of a single layer of enmeshed microfibers and nanofibers. The overall production method is highly efficient and yields a proper solid electrolyte interface (SEI) layer on the anode of the battery. The method of manufacturing such as a separator, the method of utilizing such a separator within a battery device, and the method of producing a solid electrolyte interface layer are all encompassed within this invention.

### BACKGROUND ART

Batteries have been utilized for many years for electrical energy storage in remote locations and for portable applications. Through the controlled movement of ions between electrodes (anode and cathode), a power circuit is generated, thereby providing a source of electricity that can be utilized until the excess ions in one electrode are depleted and no further electrical generation is possible. In more recent years, rechargeable batteries have been created to allow for longer lifetimes for such remote power sources, albeit through the need for connecting such batteries to other electrical sources for a certain period of time. All in all, however, the capability of reusing such a battery has led to greater potentials for use, particularly through cell phone and laptop computer usage and, even more so, to the possibility of automobiles that solely require electricity to function.

Such batteries typically include at least five distinct components. A case (or container) houses everything in a secure and reliable manner to prevent leakage to the outside as well as environmental exposure inside. Within the case are an anode and a cathode, separated effectively by a separator, as well as an electrolyte solution (low viscosity liquid) that transport ions through the separator between the anode and cathode. The rechargeable batteries of today and, presumably tomorrow, will run the gamut of rather small and portable devices, but with a great deal of electrical generation potential in order to remain effective for long periods between charging episodes, to very large types present within automobiles, as an example, that include large electrodes (at least in surface area) that must not contact one another and a large number of ions that must consistently and constantly pass through a membrane to complete the necessary circuit, all at a level of power generation conducive to providing sufficient electricity to run an automobile motor. As such, the capability and versatility of battery separators in the future must meet certain requirements that have yet to be provided within the current industry.

Generally speaking, battery separators have been utilized since the advent of closed cell batteries to provide necessary protection from unwanted contact between electrodes as well as to permit effective transport of ions within power generating cells. Typically, such materials have been of film structure, sufficiently thin to reduce the weight and volume of a battery device while imparting the necessary properties noted above at the same time. Such separators must exhibit other characteristics, as well, to allow for proper battery function. These include chemical stability, suitable porosity of ionic species, effective pore size for electrolyte transfer, proper permeability, effective mechanical strength, and the capability of retaining dimensional and functional stability when exposed to high temperatures (as well as the potential for shutdown if the temperature rises to an abnormally high level).

In greater detail, then, the separator material must be of sufficient strength and constitution to withstand a number of different scenarios. Initially, the separator must not suffer tears or punctures during the stresses of battery assembly. In this manner, the overall mechanical strength of the separator is extremely important, particularly as high tensile strength material in both the machine and cross (i.e., transverse) directions allows the manufacturer to handle such a separator more easily and without stringent guidelines lest the separator suffer structural failure or loss during such a critical procedure. Additionally, from a chemical perspective, the separator must withstand the oxidative and reductive environment within the battery itself, particularly when fully charged. Any failure during use, specifically in terms of structural integrity permitting abnormally high amounts of current to pass or for the electrodes to touch, would destroy the power generation capability and render the battery totally ineffective. Thus, even above the ability to weather chemical exposure, such a separator must also not lose dimensional stability (i.e., warp or melt) or mechanical strength during storage, manufacture, and use, either, for the same reasons noted above.

Simultaneously, however, the separator must be of property thickness to, in essence, facilitate the high energy and power densities of the battery, itself. A uniform thickness is quite important, too, in order to allow for a long life cycle as any uneven wear on the separator will be the weak link in terms of proper electrolyte passage, as well as electrode contact prevention.

In all lithium ion batteries, the electrolyte is unstable in the presence of the anode (carbonaceous). Because of this, the electrolyte degrades and forms a surface layer on the anode, called the solid electrolyte interface layer, which is formed of degraded and polymerized electrolyte on the surface of the anode. This layer prevents further decay of the electrolyte, and is conductive to lithium ions, so allows the functioning of the battery to charge and discharge continually.

With normal lithium ion separators, which have a pore size of -0.01 microns, or 10 nm, the formation of the SEI layer proceeds slowly due to the slow movement of electrolyte to the anode surface. Thus the separator acts as a regulator for the SEI layer formation process.

In production, manufacturers will attempt to run this process as quickly as possible, using minimal current and lowest voltage to minimize the time and expense of the process and maximize the utilization of the equipment.

With nonwoven separators, which have a pore size that is larger than 10 nm, more on the order of 200-500 nm, the SEI layer formation is not governed by the pore size of the separator, and proceeds faster. This creates a layer which is irregular and more open, and does not completely protect the anode, allowing further decay. It thus takes longer to form the SEI layer for nonwoven separators and it should be governed by current flow, rather than separator pore size. In addition, some nonwoven separators are made of such material and have such porosity that the SEI layer may form on the nonwoven fibers themselves and the formation process should allow sufficient time and current to allow this formation, which may be slower than that on the electrodes.

One issue is that if a "normal" formation process is used for lithium ion batteries with a nonwoven separator, or any separator of high porosity and larger pore size, is that the SEI layer will not be completely formed, and areas of the anode will still be exposed to the electrolyte. If this happens, when the cell is taken off of formation (disconnected electrically), the SEI layer will continue to form, and this process will drain charge from the cell. This SEI layer formation continuation can be misinterpreted as a "soft short" within the cell, or lead to high self-discharge until the cell is properly formed.

For batteries including such a separator, a property charging cycle must be utilized in order to create a sufficient solid electrolyte interface (SEI) layer on the anode of the battery, and also on the fibers of the separator itself. Such a cycle may include providing a first current to the battery during a first portion of the cycle in order to properly deposit electrolyte on the anode. A second current may be utilized in a second portion of the cycle. Further, a soak at high voltage may be required during the initial formation of the solid electrolyte interface layer in order to achieve low initial self-discharge.

To date, the standards in place today do not comport to such critical considerations concerning the deposition of the solid electrolyte interface layer. Thus, there still exists a need to provide parameters for deposition that allow for a sufficient solid electrolyte interface layer to deposit on the anode of a battery. Currently, such a manufacturing method to such an extent has yet to be explored throughout the battery separator industry. As such, an effective and rather simple and straightforward battery manufacturing method in terms of providing a sufficient voltage soak and current providing a sufficient electron transport and electrolyte deposition, ins prized within the rechargeable battery industry; to date, such a method has not been developed.
US2014/141336 discloses an insulating microporous polymeric battery separator comprised on a single layer of enmeshed microfibers and nanofibers. The separator has the ability to attune the porosity and pore size to any desired level through a single non-woven fabric. The separator is formed by introducing a plurality of nanofibers into an aqueous solvent, mixing the nanofibers under high shear conditions, introducing a plurality of microfibers and mixing under high shear conditions. A web of microfibers and nanofibers are formed and the web is then dried.
US2014/141337 discloses an insulating microporous polymeric battery separator comprised on a single layer of enmeshed microfibers and nanofibers. The separator has the ability to attune the porosity and pore size to any desired level through a single non-woven fabric. The average microfiber length is greater than five times the average nanofiber length and the separator has a mean flow pore size of less than 2000 nanometers.
US2014/134496 discloses an insulating microporous polymeric battery separator comprised on a single layer of enmeshed microfibers and nanofibers. The separator has the ability to attune the porosity and pore size to any desired level through a single non-woven fabric. The separator shrinks less than 5% when exposed to a temperature of 200 degrees C for 1 hour.

### DISCLOSURE OF INVENTION

In view of the foregoing disadvantages inherent in the known types of lithium ion batteries now present in the prior art, the present invention provides an improved lithium ion battery and method of manufacturing thereof, and overcomes the above-mentioned disadvantages and drawbacks of the prior art. As such, the general purpose of the present invention, which will be described subsequently in greater detail, is to provide a new and improved lithium ion battery and method which has all the advantages of the prior art mentioned heretofore and many novel features that result in a lithium ion battery which is not anticipated, rendered obvious, suggested, or even implied by the prior art, either alone or in nay combination thereof.

A distinct advantage of the present invention is the ease in manufacturing a lithium ion battery with an efficient and properly formed solid electrolyte interface layer. Another distinct advantage is that current and not the pore size of the separator limit the rate of formation of a solid electrolyte interface layer. Another distinct advantage is that a slow process and high voltage produces a uniform and complete coverage of the anode of the battery.

Lithium iron phosphate (LEP) cells have high rate capability, good cycle life and extraordinary safety compared to other lithium ion batteries (LIB). Often, they compete with lead acid batteries in applications such as e-bikes, backup power and UPS systems, power for light electric vehicles (fork lifts, golf carts, etc.) and grid storage. In these applications, they have extraordinary advantages in cycle life, energy density and charge acceptance rate. However, they suffer in both cost and safety. Converting these cells from polyolefin separators to Dreamweaver (DWI) Silver separators can increase both the safety and the cost of the cells, making them more competitive in these markets. This change can also improve the performance of LFP cells in other applications, such as power tools, electric buses and other where they compete with either nickel metal hydride (NiMH) or other LIBs.

However, some initial attempts to do a direct replacement resulted in high self-discharge after initial formation of the cells. Those cells performed equal or better on every other metric, including cycle life, high temperature cycle life, discharge capacity at various rates up to 9 C, and a complete portfolio of safety tests including hot box (150-190 C), over charge, hard short, and nail penetration. After multiple cycles, the cells also showed low self-discharge. It therefore became evident that something was different in the initial life of the cell, and it made sense to investigate the formation of the SEI layer as a likely candidate to improve the initial self-discharge of the cells.
According to one aspect of the present invention there is provided a lithium ion battery according to claim 1.
According to a further aspect of the present invention there is provided a process for the manufacture of the lithium ion battery of claim 1 comprising the steps according to claim 10.

Such a method of production has yet to be investigated within the rechargeable battery art, particularly in terms of the capability of providing a sufficient solid electrolyte interface layer that may reduce self-discharge of a rechargeable battery. The use of current is particularly important, such that specific parameters provide a sufficient solid electrolyte interface layer, such that an ideal current applied is not faster than C/4, not faster than C/6, and ore not faster than C/10 with C being the rate required to charge the cell to full capacity in one hour). Additionally, the use of voltage is very important, such that specific parameters provide a sufficient solid electrolyte interface layer, such that an ideal voltage is achieved at greater than 3.3 volts, 3.6 volts, or 3.9 volts.
Furthermore, the use of current to keep the voltage above 3.6 volts, such that a sufficient amount of time to apply the current is carried out at a time greater than six hours, preferably at a time greater than 9 hours, more preferably at a time greater than 12 hours. This process allows the SEI layer to form at a rate that is limited by current (not the pore size of the separator) and also allows a slow process at high voltage which will continue to fill any gaps and give a uniform, complete coverage of the anode.

Additionally, it should be noted that although a single-layer separator including microfibers and nanofibers together is encompassed within this inventio, the utilization of multiple layers of such a fabric structure, or of a single layer of such an inventive battery separator fabric with at least one other layer of a different type of fabric, may be employed and still within the scope of the overall invention described herein.

Such battery separators as described herein are clearly useful for improving the art of primary and rechargeable batteries, but also may be used for other forms of electrolyte conducting energy storage techniques, such as capacitors, supercapacitors and ultracapacitors. Indeed, the control allowed on the pore size for such inventive separators may allow significant improvements in the energy loss, power discharge rate, and other properties of these devices.

Additionally, such battery separators which include SEI layer formation on the fibers themselves will exhibit the smaller pore size necessary for good separation. Because the SEI layer is known to be conductive to lithium ions, the conductivity of these separators with SEI layer formed thereon will also exhibit the high ionic conductivity necessary for fast and efficient charging and discharging of the device.

These together with other objects of the invention, along with the various features of novelty that characterize the invention, are pointed out with particularity tin the claims annexed to and forming a part of this disclosure. For a better understanding of the invention, its operating advantages and the specific objects attained by its uses, reference should be made to the accompanying drawings and descriptive matter in which there are illustrated embodiments of the invention.

### BRIEF DESCRIPTIO NOF THE DRAWINGS

The novel features believed characteristic of the disclosed subject matter will be set forth in any claims that are filed. The disclosed subject matter itself, however, as well as a preferred mode of use, further objectives, and advantages thereof, will best be understood by reference to the following detailed description of an illustrative embodiment when read in conjunction with the accompanying drawings, wherein:
**FIG.1** is a schematic representation of the solid electrolyte interface on the carbonaceous anode of a lithium ion battery (not forming part of the present invention).
**FIGS.2** and **3** are SEM microphotographs at 1000 and 2000 magnification levels of one potentially preferred embodiment of a microfiber/nanofiber nonwoven fabric battery separator structure.
**FIGS. 4** and **5** are SEM micrographs at 5000 and 100000 magnification levels of another potentially preferred embodiment of an inventive microfiber/nanofiber nonwoven fabric battery separator structure.
**FIG. 6** is a graph displaying the comparison of the post self-discharge capacity and the post self-discharge open cell voltage for cells made with electrodes from a prior art Cell Manufacturer A.
**FIG. 7** is a bar graph displaying the formation variable effect on post formation cell capacity for cells from a prior art Cell Manufacturer A.
**FIG.** 8 is a bar graph displaying the formation variable effect on post self-discharge residual capacity for cells made with electrodes from prior art cell Manufacturer A.
**FIG. 9** is a graph displaying the cross correlation between first charge time and self-discharge in lithium ion batteries for cells made with electrodes from prior art Cell Manufacturer A.
**FIG. 10** is a graph displaying the comparison of the post self-discharge capacity (mAh) and the post self-discharge voltage (V) for cells made with electrodes from prior art Cell Manufacturer B.
**FIG. 11** is a bar graph displaying the formation variable effect on post formation cell capacity for cells made with electrodes from prior art Cell Manufacturer B.
**FIG. 12** is a bar graph displaying the formation variable effect on post self-discharge residual capacity for cells made with electrodes from prior art Cell Manufacturer B.
**FIG. 13** is a graph displaying the cross correlation between first charge time and self-discharge in lithium ion batteries for cells made with electrodes from prior art Cell Manufacturer B.
**FIG. 14** and **FIG. 15** are SEM micrographs at 15000 magnification level of a comparative prior art CELGARD^{®} 2400 separator taken before and after teardown of a lithium iron phosphate cell, showing no appreciable formation of the SEI layer on the separator.
**FIG. 16** is an SEM micrograph at 5000 magnification level of a Dreamweaver Silver 25 separator according to the present invention taken before inclusion in a lithium iron phosphate cell.
**FIGs. 17** and **18** are SEM micrographs at 3000 and 5000 magnification level of a Dreamweaver Silver 25 separator according to the present invention taken after teardown of a lithium iron phosphate cell, showing significant formation of the SEI layer on the separator.
**FIG. 19** is a graph showing the charge - discharge curves for the 2^{nd} and 50^{th} cycles of lithium iron phosphate cells cycled from 2.4 to 3.6 V comparing cells made with a prior art CELGARD^{®} 2400 separator to Dreamweaver Silver 25 separators of the present invention.
**FIG. 20** is a graph showing the capacity for the first 50 cycles of lithium iron phosphate cells cycled at 1C from 2.4 to 3.6 V comparing cells made with a prior art CELGARD^{®} 2400 and Dreamweaver Silver 25 separators of the present invention.
**FIG. 21** is a graph showing the rate capability of similar cells at 1C, 2C and 4C, again comparing cells made with prior art CELGARD^{®} 2400 and Dreamweaver Silver 25 separators of the present invention.
**FIG. 22** shows an exploded view of a rechargeable lithium ion battery including a battery separator according to the present invention.

The same reference numerals refer to the same parts throughout the various figures.

### DETAILED DESCRIPTION OF THE INVENTION

All the features of this invention and its preferred embodiments will be described in full detail in connection with the following illustrative, but not limiting drawings and examples.

### Definitions

Solid Electrolyte Interface (SEI) layer- A layer of material formed on the carbonaceous anode through the decay of the electrolyte.

Formation- A process used to create the SEI layer, generally determined by attaching the cell to a charging device capable of controlling both current and voltage, and taking the cell through a determined voltage and current profile.

Carbonaceous Anode- An electrode capable of accepting lithium ions comprising carbonaceous materials such as graphite, hard carbon, activated carbon, and others, as generally practiced in the lithium ion battery industry. The anode is generally a coating on a conductive material which is used to distribute and collect electronic current, called a current collector. A common material for the anode current collector is copper foil.

Cathode- An electrode capable of accepting lithium ions which generally comprise lithium oxide compounds, such as lithium iron phosphate, lithium carbonate, nickel manganese carbonate, and others as generally practiced in the industry. Others may use sulfur compounds, spinels, lithium manganese oxide, and others as are well known to those practice in the art. Cathodes generally also have a current collector which is current practice is aluminum foil.

Electrolyte- A liquid in which lithium salts can be dissolved, which is used for transporting lithium ions from the anode to the cathode. Examples include ethylene carbonate, propylene carbonate, di-ethyl carbonate, dimethyl carbonate, mixtures of all of the above, and others. Electrolytes also may include additives, and specifically additives to help the formation of the SEI layer.

C-rate- The C-rate is determined by the current required to charge the cell to full capacity. 1C is the rate in which the current required is sufficient to charge the cell to full capacity in one hour, generally taken by taking the cell capacity and dividing by one hour. Thus, for a 1Ah cell, the 1C charging rate is 1 Ampere. 2C is twice this rate, and ½ C is half this rate.

### Microfiber and Nanofiber Production

As noted above, the microfiber may be constructed from any polymer (or polymer blend) that accords suitable chemical and heat resistance in conjunction with internal battery cell conditions, as well as the capability to form suitable fiber structures within the ranges indicated. Such fibers may further have the potential to be treated through a fibrillation or like technique to increase the surface area of the fibers themselves for entanglement facilitation during nonwoven fabrication. Such fibers may be made from longstanding fiber manufacturing methods such as melt spinning, wet spinning, solution spinning, melt blowing and others. In addition, such fibers may begin as bicomponent fibers and have their size and/or shape reduced or changed through further processing, such as splittable pie fibers, islands-in-the-sea fibers and others. Such fibers may be cut to an appropriate length for further processing such lengths may be less than 50 mm, or less than 25 mm, or less than 12 mm even. Such fibers may be also be made long to impart superior processing or higher strength to have a length that is longer than 0-5. Mm, longer than 1 mm, or even longer than 2 mm. Such fibers may also be fibrillated into smaller fibers or fibers that advantageously form wet-laid nonwoven fabrics.

Nanofibers for use in the current invention may be made through several longstanding techniques, such as islands-in-the-sea, centrifugal spinning, electrospinning, film or fiber fibrillation, and the like. Teijin and Hills both market potentially preferred islands-in-the-sea nanofibers (Teijin's is marketed as NonoFront fiber polyethylene terephthalate fibers with a diameter of 500 to 700 nm). Dienes and FiberRio are both marketing equipment which would provide nanofibers using the centrifugal spinning technique. Xanofi is marketing fibers and equipment to make them using a high shear liquid dispersion technique. Poly-aramids are produced by DuPont in nanofiber state that exhibit excellent high temperature resistance, as well as other particularly preferred properties.

Electrospinning nanofiber production is practiced by DuPont, E-Spin Technologies, or on equipment marketed for this purpose by Elmarco. Nanofibers fibrillated from films are disclosed in U.S. Pat. Nos. 6,110,588, 6,432,347, and 6,432,532. Nanofibers fibrillated from other fibers may be done so under high shear, abrasive treatment. Nanofibers made from fibrillated cellulose and acrylic fibers are marketed by Engineered Fiber Technologies under the brand name EFTEC^{™}. Any such nanofibers may also be further processed through cutting and high shear slurry processing to separate the fibers and enable them for wet laid nonwoven processing. Such high shear processing may or may not occur in the presence of the required micro fibers.

Nanofibers that are made from fibrillation in general have a transverse aspect ratio that is different from those made initially as nanofibers in typical fashion (island-in-the-sea, for instance). One such transverse aspect ratio is described in full in U.S. Pat. No. 6,110,588. As such, in one preferred embodiment, the nanofibers have a transverse aspect ratio of grater than 1.5:1, preferably grater than 3.0:1, more preferably grater than 5.0:1.

As such, acrylic, polyester, cellulose and polyolefin fibers are particularly preferred for such a purpose, with fibrillated acrylic and cellulose fibers, potentially most preferred. Again, however, this is provided solely as an indication of a potentially preferred type of polymer for this purpose and is not intended to limit the scope of possible polymeric materials or polymeric blends for such a purpose.

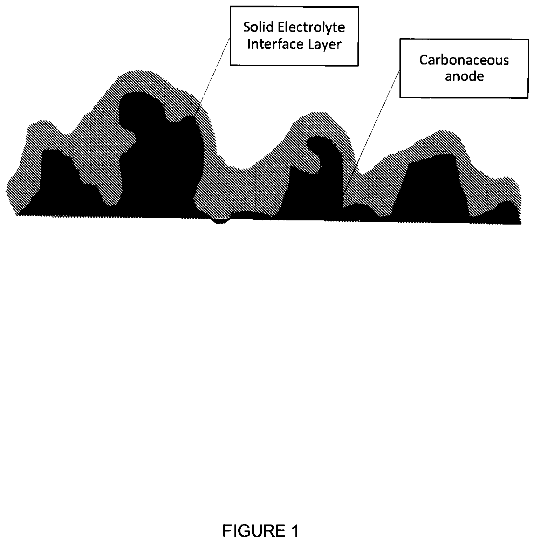

**FIG. 1** provides a schematic representation of the solid electrolyte interface on the carbonaceous anode of a lithium ion battery that does not form part of the present invention.

In all lithium ion batteries, the electrolyte is unstable in the presence of the anode (carbonaceous). Because of this, the electrolyte degrades and forms a surface layer on the anode, called the solid electrolyte interface layer, which is formed of degraded and polymerized electrolyte on the surface of the anode. This layer prevents further decay of the electrolyte, and is conductive to lithium ions, so allows the functioning of the battery to charge and discharge continually.

With normal lithium ion separators, which have a pore size of ~0.01 microns, or 10 nm, the formation of the SEI layer proceeds slowly due to the slow movement of electrolyte to the anode surface. Thus the separator acts as a regulator for the SEI layer formation process.

In production, manufacturers will attempt to run this process as quickly as possible, using minimal current land lowest voltage to minimize the time and expense of the process and maximize the utilization of the equipment.

With nonwoven separators, which have a pore size that is larger than 10 nm, more on the order of 200-55 nm, the SEI layer formation is not governed by the pore size of the separator, and proceeds faster. This creates a layer which is irregular and more open, and does not completely protect the anode, allowing further decay. It thus takes longer to form the SEI layer for nonwoven separators.

One issue is that if a "normal" formation process is used for lithium ion batteries with a nonwoven separator of high porosity and larger pore size, is that the SEI layer will not be completely formed, and areas of the anode will still be exposed to the electrolyte. If this happens, when the cell is taken off of formation (disconnected electrically), the SEI layer will continue to form, and this process will drain charge from the cell. This SEI layer formation continuation can be misinterpreted as a "soft short" within the cell, or lead to high self-discharge until the cell is properly formed.

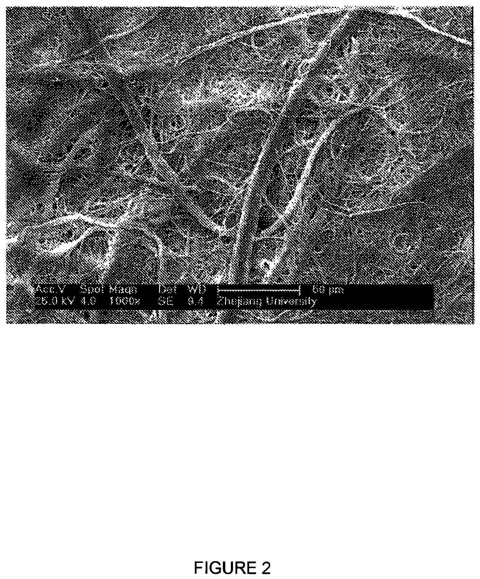

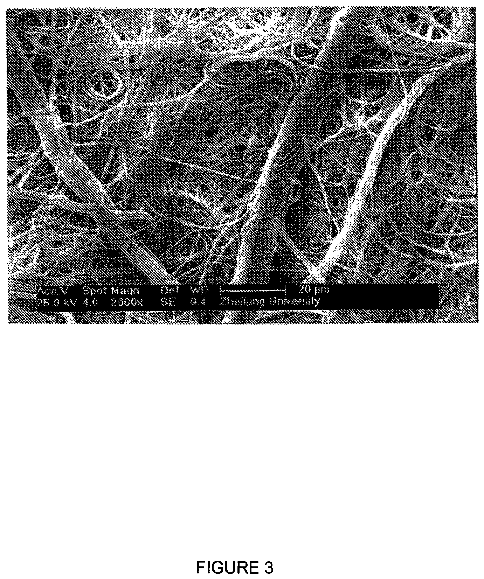

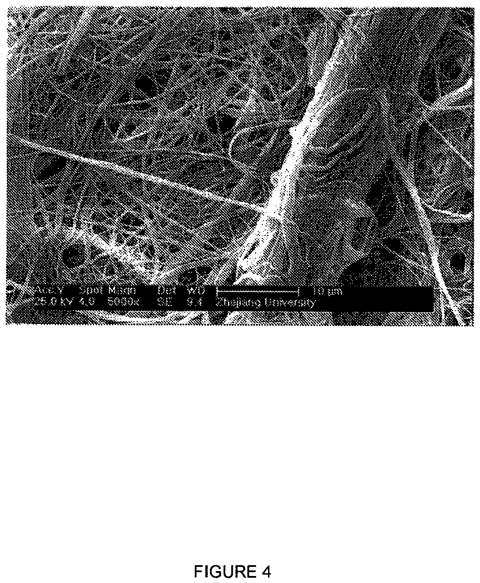

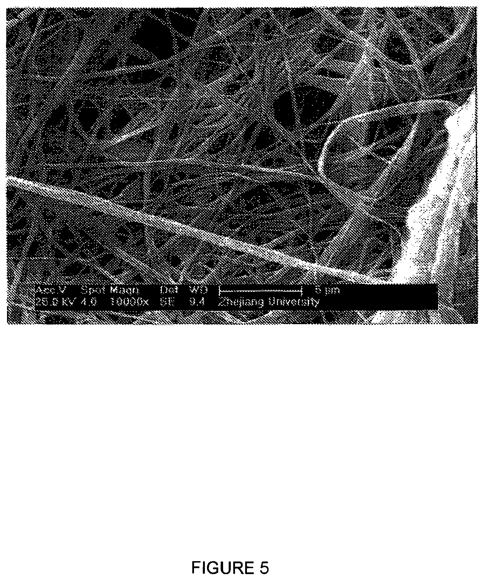

One potentially preferred embodiment of the initial combination of microfiber and nanofibers is the EFFECT^{™} A-010-4 fibrillated polyacrylonitrile fibers (**FIGS.2** and **3**), which have high populations of nanofibers as well as residual microfibers. The resultant nanofibers present within such a combination are a result of the fibrillation of the initial microfibers. Nonwoven sheets made of these materials are shown in **FIGS. 2** and **3**. By way of example, these fibers can be used as a base material, to which can be added further microfibers or further nanofibers as a way of controlling the pore size and other properties of the nonwoven fabric, or such a material may be utilized as the nonwoven fabric battery separator itself. Examples of such sheets with additional microfibers added are shown in **FIGS. 4** and **5**. Typical properties of the acrylic Micro/Nanofibers are shown below in Table 1.

**TABLE 1**

| Acrylic Micro/Nanofiber Properties | |
|---|---|
| Density, g/cm³ | 1.17 |
| Tensile Strength, MPa | 450 |
| Modulus, GPa | 6.0 |
| Elongation, % | 15 |
| Typical Fiber Length, MM | 4.5-6.5 |
| Canadian Standard Freeness, ml | 10-700 |
| BET Surface Area, M²/g | 50 |
| Moisture Regain, % | <2.0 |
| Surface Charge | Anionic |

Another potentially preferred embodiment of the initial combination of microfiber and nanofibers is the EFTEC^{™} L-010-4 fibrillated cellulose fibers (**FIGS. 2** and **3**), which have high populations of nanofibers as well as residual microfibers. The resultant nanofibers present within such a combination are a result of the fibrillation of the initial micro fibers. By way of example, these fibers can be used as a base material, to which can be added further microfibers or further nanofibers as a way of controlling the pore size and other properties of the nonwoven fabric, or such a material may be utilized as the nonwoven fabric battery separator itself.

Such fibers are actually present, as discussed above, in a pulp-like formulation, thereby facilitating introduction within a wetlaid nonwoven fabric production scheme.

### Nonwoven Production Method

Material combinations can then be measured out to provide differing concentrations of both components prior to introduction together into a wet-laid manufacturing process. Handsheets can be made according to TAPPI Test Method T-205 (basically, as described above, mixing together in a very high aqueous solvent concentration formulation and under high shear conditions as are typically used in wet laid manufacturing and described as "refining" of fibers, ultimately laying the wet structure on a flat surface to allow for solvent evaporation).

The similarity in structure of the nonwoven fabrics of **FIGS. 4** and **5** (larger microfibers and smaller nanofibers) are clarified, and the presence of fewer amounts of nanofibers in these structures is evident from these photomicrographs, as well.

The process for making and forming the cell, as outlined in Table 3, comprises steps of:
- Drying the separator to eliminate residual water in an air oven, convection oven, forced air oven, vacuum oven or other oven known to those in the art. This step is less necessary and also limited in temperature for polyolefin separators. For nonwoven separator, residual water is present and can be eliminated in hand sheets with drying in an oven for 1 hour at 100°C. More preferably, this drying is for 3 hours, or most preferably for 12 hours. A more preferable temperature is 110°C, and most preferable 130°C. For material on rolls, the time and temperature required may depend on the size and put up of the roll, but in general 12 hours at 100°C may be sufficient. However, 110°C may be a more preferable drying temperature, and 130°C most preferable. Additionally, 24 hours would be more preferable to eliminate residual moisture, with 48 hours most preferable.
- Assembling the cells. This can be according to any procedure known to those in the art, and in any cell format. Procedures may include winding, stacking, laminating or other procedures. Cell formats may include cylindrical cells of various shapes and sizes well known in the art, and also polymer cells and prismatic cells also both of shapes and sizes well known in the art.
- Drying Cells: In some instances to eliminate the last residual moisture from the anode, cathode and separator, the cell is dried, which may be in an air over, convection oven, forced air oven, or vacuum oven. This may be done at 100°C or higher temperature, preferably 110°C, most preferably 130°C.
- Filling cells with electrolyte: Filling may be by any means to bring the electrolyte into the interior of the cell, and many methods are well known in the art. The electrolyte may be any lithium ion battery electrolyte which generally comprises a mixture of organic solvents as well as a salt of lithium and a couterion. Examples of organic solvents include ethylene carbonate, methylene carbonate, diethyl carbonate, dimethyl carbonate, and propylene carbonate. An example of a lithium salt is LiPF₆. Alternatively, ionic liquids can be used and may provide advantages, including higher thermal stability and stability at higher voltages.
- Formation: The assembled and filled cells must now go through an initial charge process to form the SEI layer and charge the cells. This formation will comprise various charging steps, which can be defined in terms of their current and voltage profile, and have been described above. This formation current and voltage profile may comprise pauses at various points in the charge profile which may be at constant voltage of floating voltage. The use of current is particularly important in the present invention, such that specific parameters provide a sufficient solid electrolyte interface layer, such that the current applied is not faster than C/4, not faster than C/6, or not faster than C/10 (with C being the rate required to charge the cell to full capacity in one hour). Additionally, the use of voltage is very important in the present invention, such that specific parameters provide a sufficient solid electrolyte interface layer, such that the voltage is achieved at greater than 3. 3 volts, 3.6 volts, or 3.9 volts. Furthermore, the use of current to keep the voltage above 3.6 volts, such that a sufficient amount of time to apply the current is carried out at a time greater than six hours, preferably at a time greater than 9 hours, more preferably at a time greater than 12 hours. This process allows the SEI layer to form at a rate that is limited by current (not the pore size of the separator) and also allows a slow process at high voltage which will continue to fill in any gaps and give a uniform, complete coverage of the anode.

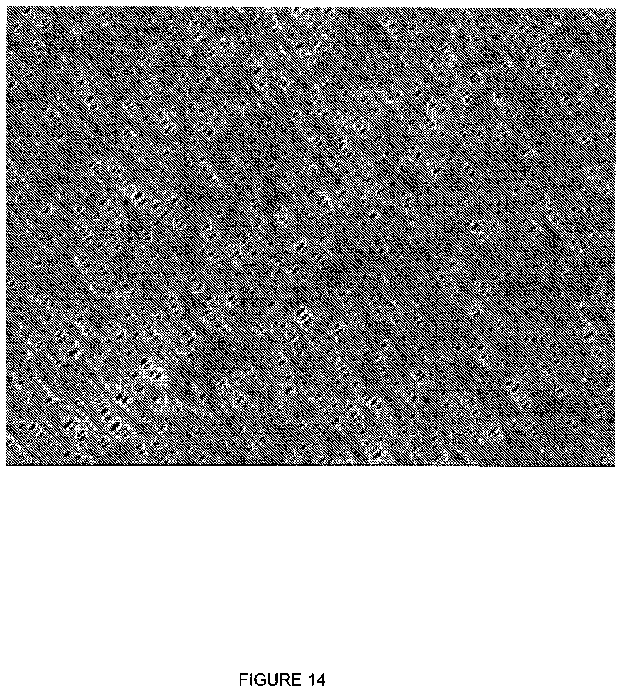

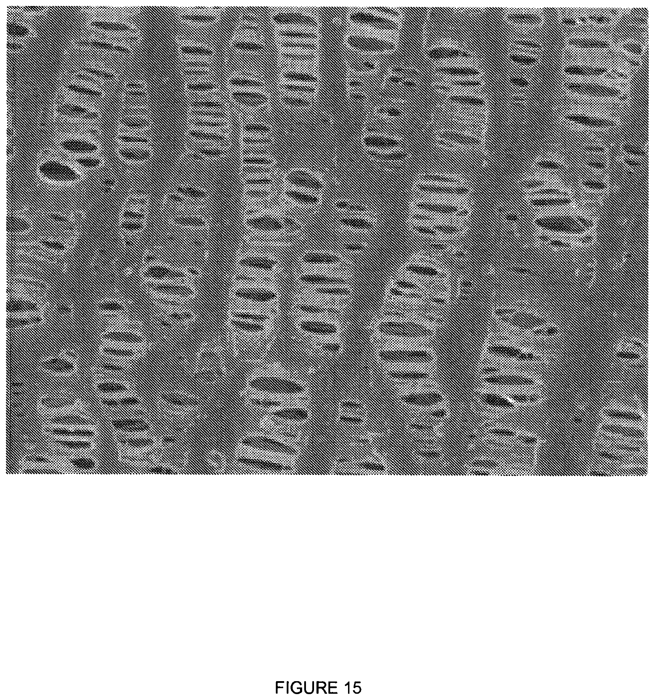

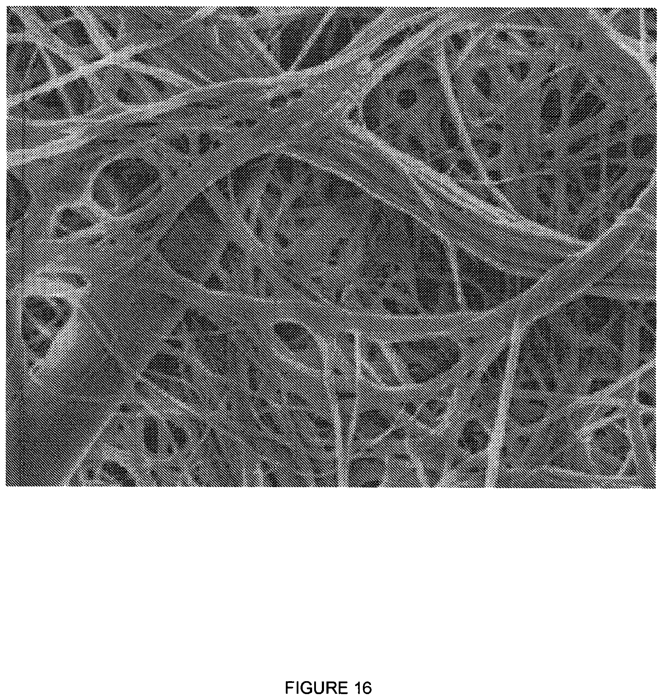

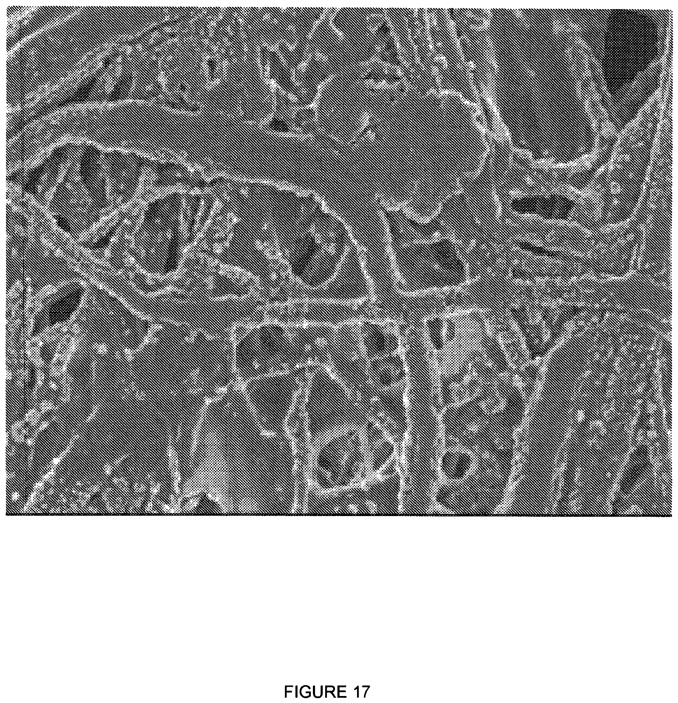

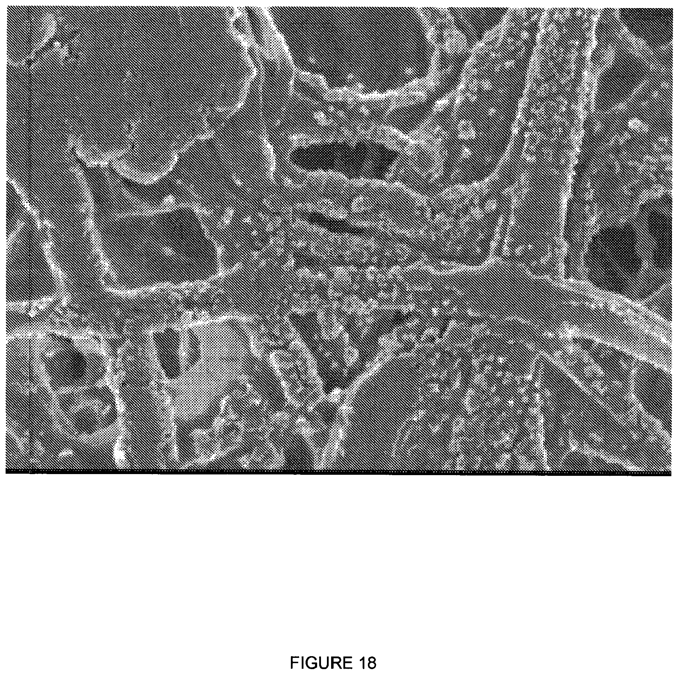

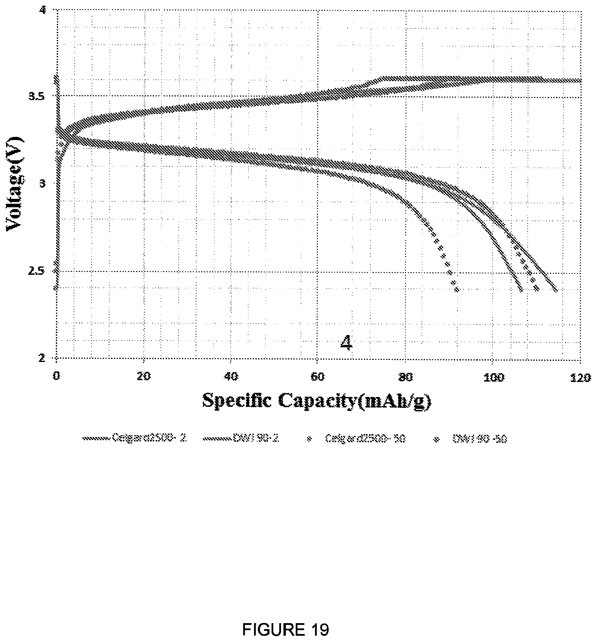

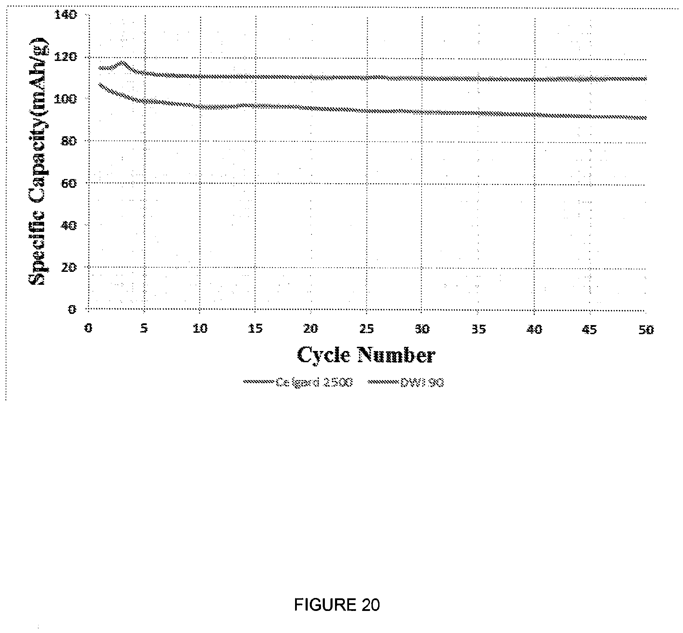

Cells formed under this process also differ in that the SEI layer has formed on the separator itself, rather than just the anode, which does not happen with prior art polyolefin separators. This can clearly be seen in the case of the prior art polyolefin separators in **FIG. 14** and **FIG 15**, which show a CELGARD^{®} 2400 separator prior to inclusion in a cell, and after 29 cycles in an LFP cell. In the case of nonwoven separators, the SEI layer can be made under proper conditions to form on the separator itself, as can be seen in the difference between **FIG. 16**, which shows the separator before inclusion in the cell, and **FIG. 17** and **FIG. 18**, which show the separator after 29 cycles in an LFP cell, and in which there is clear formation of the SEI layer on the separator. As shown in the charge discharge curves in **FIG. 19**, the cycle life in **FIG. 20**, and the rate capability in **FIG**. **21**, even with the inclusion of the SEI layer in the separator itself, the conductivity of the separator and electrolyte and SEI layer is higher than the prior art CELGARD^{®} 2400 separator, resulting in higher discharge capacity, less decay on cycling, and higher rate capability.

The inclusion of an SEI layer on the separator may take a variety of forms. As such, such an SEI layer can be seen under SEM micrographs to comprise regions where substantially all of the pores present in SEM micrographs of the initial separator have been filled. The SEI layer may also comprise regions where nanofibers present in SEM micrographs of the initial separator are not observed to be present because they have been embedded in the SEI layer. Lithium ion cell SEI layers are known to be made from decayed electrolyte, and so will contain the lithium salt used in their manufacture, containing high levels of fluorine and phosphorus, which are measured by energy dispersive x-ray spectroscopy, or EDS. Such separators of the present invention comprise regions which have a phosphorus level as measured by EDS of greater than 1.5%, preferablygreater than 2.0%, more preferably grater than 2.5%. Such separators comprise regions which have a fluorine level as measured by EDS of greater than 5%, preferably greater than 7%, more preferably greater than 9%.

### Examples

Dreamweaver Silver separator is made according to the process described in US Patent 8,936,878. The examples used in these tests were Dreamweaver Silver 25, comprising EFTec A-010-04 nanofibrillated polyacrylonitrile fiber, EFTec L-010-04 nanofibrillated cellulose fibers, and polyethylene terephthalate fibers at 5 mm length and 0.3 denier per filament. The properties of this separator are shown in Table 2 below.

**TABLE 2**

| **Basic Membrane Property** | **Unit of Measure** | **Dreamweaver Silver^{™} 25** |
|---|---|---|
| **Thickness (12.6 psi)** | µm | 27 |
| **Thickness (25 psi)** | µm | 26 |
| **Gurley (JIS)** | Seconds | 80 |
| **Porosity** | % | 56% |
| **Pore Size** | µm | 1.1 |
| **TD Shrinkage @ 160 C** | % | 0 |
| **MD Shrinkage @ 160 C** | % | 2 |
| **TD Strength** | Kgf/cm² | 175 |
| **MD Strength** | Kgf/cm² | 330 |
| **Young's Modulus** | Kgf/cm² | 23,000 |
| **Melt Integrity** | C | 300 |
| **Puncture Strength** | G | 280 |
| **Moisture Content** | % | 3.7% |

The fabric was measured for thickness and then cut into suitable sizes and shapes for introduction within lithium ion rechargeable battery cells. Prior to any such introduction, however, samples of the battery separator fabrics were analyzed and tested for various properties in relation to their capability as suitable battery separators. Furthermore, comparative examples of battery separator nanofiber membranes according to US. Pat. No. 7,112,389, as well as prior art battery separator films from CELGARD, are reported from the tests in the patent and from CELGARD product literature.

### Battery Separator Base Analysis and Testing

The test protocols were as follows:
Porosity was calculated according to the method in U.S. Pat. No. 7,112,389. Results are reported in %, which related to the portion of the bulk of the separator that is filled with air or non-solid materials, such as electrolyte when in a battery.

Gurley Air Resistance was tested according to TAPPI Test Method T460,. The instrument used for this test is a Gurley Densometer Model 4110. To run the test, a sample is inserted and fixed within the densometer. The cylinder gradient is raised to the 100 cc (100 ml) line and then allowed to drop under its own weight. The time (in seconds) it takes for 100 cc of air to pass through the sample is recorded. Results are reported in seconds/ 100 cc, which is the time required for 100 cubic centimeters of air to pass through the separator.

Mean Flow Pore Size was tested according to ASTM E-1294 "Standard Test Method for Pore Size characteristics of Membrane Filters Using Automated Liquid Porosimeter" which uses an automated bubble point method from ASTM F 316 using a capillary flow porosimeter. Tests were performed by Porous materials, Inc., Ithaca, NY.

The air permeability of a separator is a measurement of the time required for a fixed volume of air to flow through a standard area under light pressure. The procedure is described in ASTM D-726-58.

### Experimental: Prior Art Cell Manufacturer A

Production lithium iron phosphate electrodes were obtained from two manufacturers and tested in single layer pouch cells clamped between two pieces of Plexiglas to give uniform pressure. In the cells, the electrical properties other than self-discharge were very consistent, and will be reported more completely elsewhere.

Single layer pouch cells were made of dimensions 50 mm x 50 mm. The electrodes (matching anode and cathode pairs) were commercially produced by Chinese battery producers. The cells were filled with lithium ion battery electrolyte comprising 1 mole LiPF₆ in a 4:3:3 volumetric mixture of ethylene carbonate, dimethyl carbonate and diethyl carbonate, sealed formed and tested according to the procedure and test parameters in Table 3, using the variables in Table 4 found below (specifically, charge rate, voltage cutoff current, and number of cycles for the formation of the SEI layer, and drying temperature for the separator for each cell). Testing was done on a Neware battery tester using the procedures listed below.

The cell building process included separator drying, cell assembly and drying, electrolyte filling and formation, followed by a self-discharge test at 30% of charge (SoC) and a final capacity test comprising a full charge and full discharge. Such test results are provided in Tables 3 and 4, below.

**TABLE 3**

| **Cell Cycle** |
|---|
| Dry separator 3 hrs under vacuum at Drying T |
| Assemble cells |
| Dry cells overnight at 100 C |
| Fill Cells with electrolyte, wait >2 hrs |
| Tap charge to 2.00 V |
| CV @ 2.00 V 24 hrs |
| Sit 24 hours (rest) |
| Formation charge at CC rate to Voltage then CV to CV Cutoff |
| Discharge at CC rate to 2.50 V |
| 2^{nd} Formation charge if included |
| 2^{nd} Discharge if included |
| Charge cells at C/6 to 30% SoC |
| Record voltage (24 hour rest period) |
| Wait 14 days |
| Record Voltage |
| Discharge at C/6 to 2.50 V |
| Charge cells at C/6 to 34.60 V, CV to C/60 |
| Discharge cells at C/6 to 2.50 V |
| Charge cells to 50% SoC at C/6 |
| Ship cells to DWI |

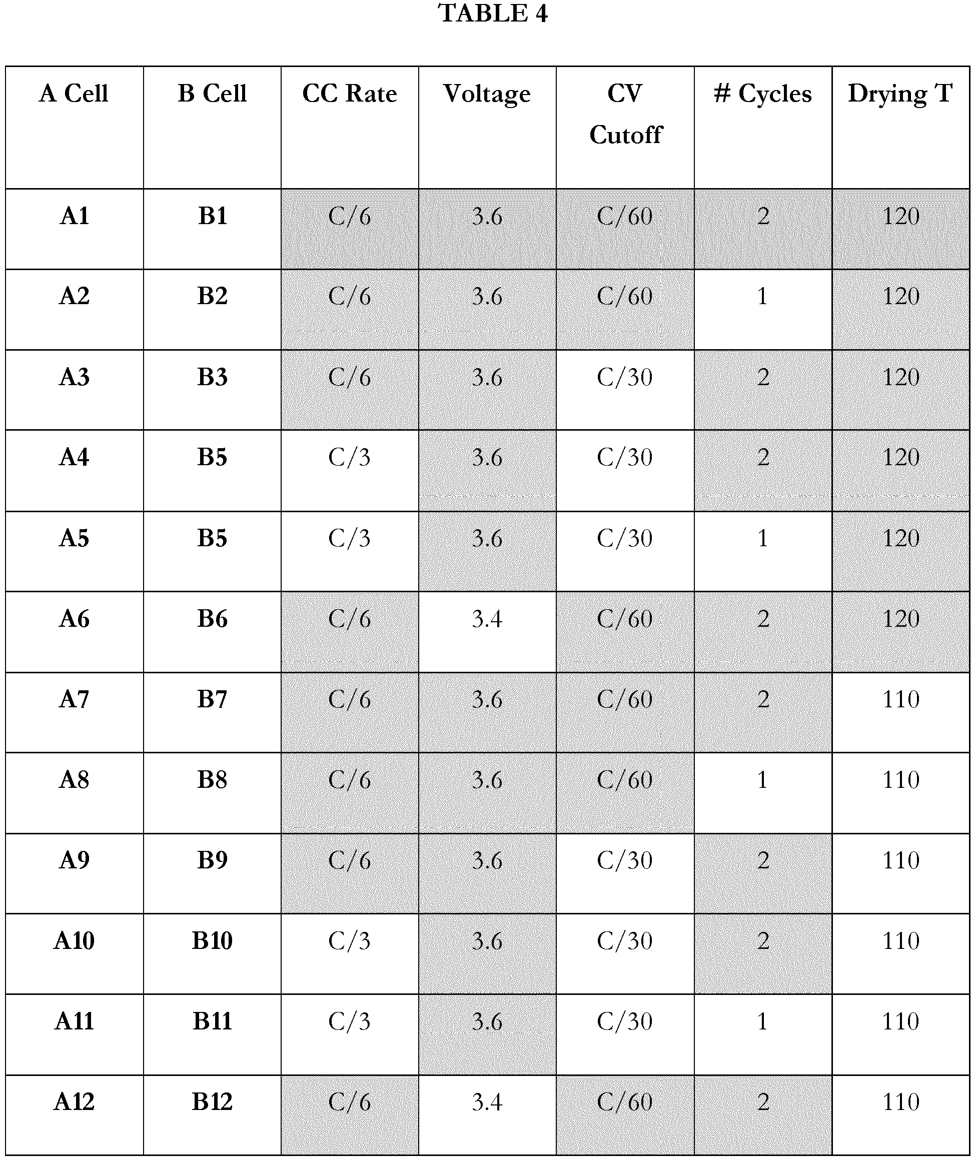

The results of formation of the cells made from electrodes from manufacturer A (found above) are shown below in Table 5. It is noted that each cell condition is the average of two cells.

**TABLE 5**

| **Cell** | **1^{st} Cycle Coulombic Efficiency** | **1^{st} Cycle Charge Time** | **2^{nd} Cycle Coulombic Efficiency** | **2^{nd} Cycle Charge Time** |
|---|---|---|---|---|
| **A1** | 68% | 12:05:30 | 101.7% | 7:09 |
| **A2** | 45% | 42:55:30 | | |
| **A3** | 84% | 7:45:00 | 100.1% | 5:42 |
| **A4** | 75% | 10:25:30 | 101:6% | 5:57 |
| **A5** | 81% | 8:02:00 | | |
| **A6** | 84% | 9:01:00 | 97.6% | 7:08 |
| **A7** | 76% | 12:18:00 | 102:7% | 6:12 |
| **A8** | 50% | 42:06:30 | | |
| **A9** | 83% | 9:11:00 | 100.7% | 6:19 |
| **A10** | 76% | 8:59:00 | 100.0% | 5:59 |
| **A11** | 57% | 14:52:30 | | |
| **A12** | 81% | 9:07:00 | 98.3% | 6.28 |

From these results, a few observations may be made. The coulombic efficiency for the first charge cycle is relatively low, ranging from 45% for condition A2 to 84% for condition A3 and A6, with conditions A5, A9 and A12 all greater than 80%. The charge cycle time correlates with the coulombic efficiency, with a huge range from 8:02 hours to 42:55 hours. The extremely long times all occurred with cells having only a single charge (A2, A8, A11). The variation between cells in these pairs is very large, indicating potential experimental error. The coulombic efficiency for the 2^{nd} cycle, where it was performed, is very close to 100% for all cells, ranging from 97.6% to 102%. The mean difference between pairs of cells was 0.75%. The charge time for the 2^{nd} cycle is also relatively uniform, ranging only from 5:42 hours to 7:09. The average variation between pairs of cells was 0:30 hours, indicating a very tight correlation about the mean.

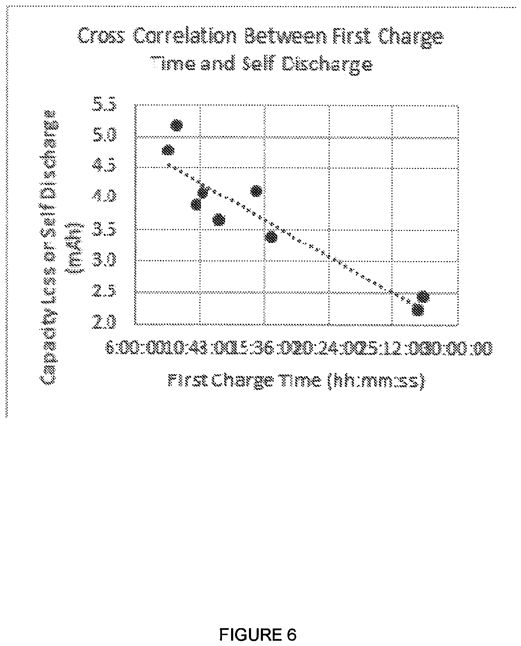

The results of the self-discharge testing, including the discharge after self-discharge, are included in Table 6 shown below as well as **FIG. 6****.** It is again noted that each cell condition is the average of two cells.

**TABLE 6**

| **Cell** | **Self Discharge Day 1** | **Self Discharge Day 2** | **Self Discharge Loss V** | **Self discharge Residual mAh** | **Self Discharge Loss mAh** | **Final Discharge capacity** |
|---|---|---|---|---|---|---|
| **A1** | 3.293 | 3.263 | 0.030 | 14.1 | 3.9 | 55.4 |
| **A2** | 3.295 | 3.281 | 0.014 | 15.7 | 2.3 | 57.0 |
| **A3** | 3.298 | 3.258 | 0.040 | 13.5 | 4.5 | 54.6 |
| **A4** | 3.290 | 3.258 | 0.032 | 14.0 | 4.0 | 56.1 |
| **A5** | 3.295 | 3.268 | 0.027 | 13.6 | 4.4 | 52.8 |
| **A6** | 3.292 | 3.264 | 0.028 | 12.2 | 5.8 | 50.5 |
| **A7** | 3.290 | 3.264 | 0.026 | 14.6 | 3.4 | 54.9 |
| **A8** | 3.297 | 3.280 | 0.017 | 17.8 | 0.2 | 56.5 |
| **A9** | 3.285 | 3.252 | 0.033 | 13.0 | 5.0 | 58.9 |
| **A1** | 3.288 | 3.254 | 0.034 | 12.9 | 5.1 | 56.7 |
| **A1** | 3.295 | 3.267 | 0.029 | 15.9 | 2.1 | 55.6 |
| **A1** | 3.294 | 3.266 | 0.029 | 13.4 | 4.6 | 51.4 |

Again, a few observations can be made. The range of self-discharge loss, both in voltage and in capacity, is quite high. For voltage, it ranges from a loss of 14 mV to 40 mV, and in capacity it ranges from 0.2 mAh to 5.8 mAh. It can be inferred from **FIG.6** that there is only a loose correlation between the final self-discharge voltage, the loss in voltage on self-discharge, and the loss in capacity on self-discharge. Furthermore, the range of final discharge capacity is high, but the correlation with process parameters is only slight. There is likely high experimental error due to both the small size of the electrodes and the potential for misalignment. There is not a high correlation between pairs, with an average variation in pairs of greater than 2 mAh.

### Data Analysis: Prior Art Cell Manufacturer A

The data set was designed in a quasi-designed-experiment, which allows for averaging of partial sets to isolate a single variable and obtain a change in various measurements associated with that variable. These averages and the variables isolated are shown below in Table 7.

**TABLE 7**

| **Variable** | **Group #1** | **Group #2** |
|---|---|---|
| **Drying Temperature** | A1, A2, A3, A4, A5, A6 | A7, A8, A9, A10, A11, A12 |
| **Constant Current Charge Rate** | A1, A2, A7, A8 | A4, A5, A10, A11 |
| **Constant Voltage Current Cutoff** | A1, A7 | A3, A9 |
| **Charge Voltage Cutoff** | A1, A7 | A6, A12 |
| **# Cycles** | A2, A5, A8, A11 | A1, A4, A7, A10 |

Averaging the data among each of these groups allows the variable to be isolated among the largest group of samples, averaging out experimental error, and also identify first level cross correlations. In each case, the minimum number of cells averaged is eight (for Constant Voltage Current Cutoff and Charge Voltage Cutoff). The averages obtained for each measurement are shown below in Table 8.

**TABLE 8**

| | **C1 Efficiency** | **C1 Time** | **C2 Efficiency** | **C2 Time** | **Self Discharge Day 1** | **Self Discharge Day 14** | **Self Discharge Loss V** | **Self Discharge Loss mAh** | **Final Charge capacity** | **Final Discharge Capacity** |
|---|---|---|---|---|---|---|---|---|---|---|
| **Drying Temp** | | | | | | | | | | |
| 110 C | 71% | 16:05:40 | 100.4% | 6:14 | 3.291 | 3.264 | 0.028 | 3.4 | 56.1 | 55.7 |
| 120 C | 73% | 15:02:25 | 100.3% | 6.29 | 3.294 | 3.265 | 0.029 | 4.1 | 65.0 | 54.4 |

| **CC Rate** | | | | | | | | | | |
|---|---|---|---|---|---|---|---|---|---|---|
| C/6 | 60% | 27:21:23 | 102.2% | 6.41 | 3.294 | 3.272 | 0.022 | 2.4 | 56.4 | 56.0 |
| C/3 | 72% | 10:34:45 | 100.8% | 5.58 | 3.292 | 3.261 | 0.030 | 3.9 | 55.8 | 55.3 |

| **CV Cutoff** | | | | | | | | | | |
|---|---|---|---|---|---|---|---|---|---|---|
| C/60 | 72% | 12:11:45 | 102.2% | 6.41 | 3.291 | 3.263 | 0.028 | 3.7 | 55.7 | 55.1 |
| C/30 | 84% | 8:28:00 | 100.4% | 6:00 | 3.292 | 3.255 | 0.037 | 4.8 | 57.2 | 56.8 |

| **Voltage** | | | | | | | | | | |
|---|---|---|---|---|---|---|---|---|---|---|
| 3.6 | 72% | 12:11:45 | 102.2% | 6:41 | 3.291 | 3.263 | 0.028 | 3.7 | 55.7 | 55.1 |
| 3.4 | 83% | 9:04:00 | 97.9% | 6:48 | 3.293 | 3.259 | 0.031 | 4.1 | 56.3 | 55.8 |

| **Cycles** | | | | | | | | | | |
|---|---|---|---|---|---|---|---|---|---|---|
| 1 Cycle | 59% | 26:59:08 | | | 3.2 95 | 3.274 | 0.022 | 2.2 | 55.9 | 55.5 |
| 2 Cycles | 74% | 10:57:00 | 24:21:37 | 6:19 | 3.290 | 3.259 | 0.031 | 4.1 | 56.3 | 55.8 |

This data can tell an in dividual if a result (cell in the table) is changed by a variable (left most column of the table). Among the results, two are of importance to the user of a cell as performance criteria. The first of these is self-discharge, which we will identify with the Self Discharge Loss mAh, the actual capacity lost during the 14 day hold period. The second is the final Discharge Capacity, which can be taken as the initial capacity of the cell as it would be ready to be sold. For charge capacity, some conclusions can be drawn.

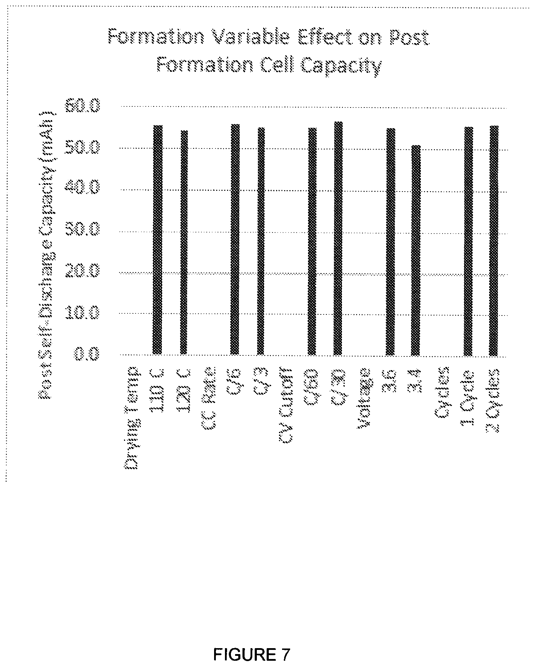

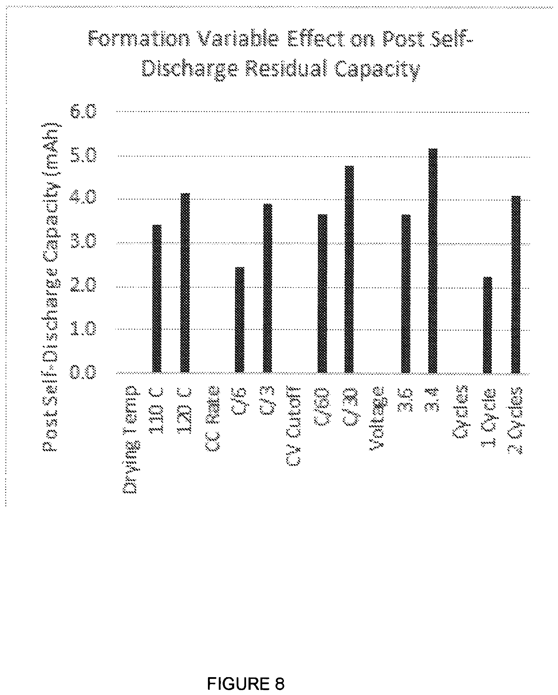

The Final Discharge Capacity is affected positively by lower drying temperature and higher charge cutoff voltage, each of which affects the capacity by 3-4 mAh, or 507%. These relations are shown in **FIG. 7****.** Furthermore, the Self Discharge Loss (mAh) is affected positively (lower) by more variables as shown in **FIG. 8**, including lower drying temperature, lower constant current charging rate, lower constant current cutoff current, higher charging voltage, and fewer cycles (this appears to be an experimental anomaly, as the coulombic efficiencies for these cells do not correlate with the coulombic efficiencies of the first cycle of cells that undergo two cycles). These results are one basis for this invention, which includes a formation cycle using low current, high voltage, and a long soak at high voltage in this case corresponding to the low constant current cutoff current.

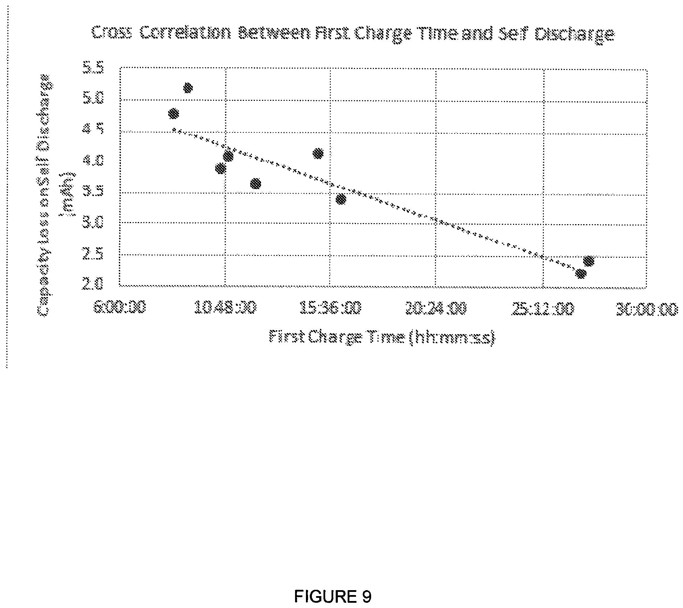

**FIG. 9** is a table displaying the cross correlation between first charge time and self-discharge in lithium ion batteries. The strongest correlation is between the total time spent in the first charge cycle and the self-discharge residual capacity after 14 days on open cell, which is shown in the chart to the right. Based on formation conditions, the capacity loss can be reduced by over 50%, from 5 mV to under 2.5 mV (the cells were charged to 18 mV, or 30% SOC prior to self-discharge). It can generally be seen that there appears to be a strong correlation with using longer initial charge times to reduce the self-discharge at the end of formation, independent of the variables used to achieve the higher charge time.

### Experimental: Prior Art Cell Manufacturer B

The results of formation of the cells made from electrodes from Prior Art Manufacturer B are shown below in Table 9. Each cell condition is the average of two cells.

**TABLE 9**

| **Cell** | **1^{st} Cycle Coulombic Efficiency** | **1^{st} Cycle Charge Time** | **2^{nd} Cycle Coulombic Efficiency** | **2^{nd} Cycle Charge Time** |
|---|---|---|---|---|
| **B1** | 53% | 17:16:00 | 99.7% | 7:10 |
| **B2** | 82% | 9:04:30 | | |
| **B3** | 35% | 22:11:00 | 99.2% | 6:34 |
| **B4** | 46% | 15:16:30 | 100.7% | 6:51 |
| **B5** | 34% | 24:44:00 | | |
| **B6** | 82% | 14:13:30 | 100.0% | 7:18 |
| **B7** | 41% | 30:34:30 | 75.5% | 13:33 |
| **B8** | 60% | 14:58:30 | | |
| **B9** | 17% | 45:29:30 | 99.4% | 7:19 |
| **B10** | 56% | 18:32:30 | 75.5% | 10:03 |
| **B11** | 84% | 8:46:00 | | |
| **B12** | 85% | 10:50:00 | 98.8% | 7:56 |

From these results, a few observations may be made, which are very similar to those for prior art Manufacturer A. The coulombic efficiency for the first charge cycle is relatively low, ranging from 13% for condition B8 to 85% for conditions b12, with conditions B2, B6 and B11 all greater than 80%. The charge cycle time correlates with the coulombic efficiency, with a huge range from 8:46 hours to 45:29 hours. There does not appear to be a correlation between the long charge times and formation conditions, different from Manufacturer A. Some of the pairs had good consistency, while others had wide variation, indicating intermittent experimental error. The coulombic efficiency for the 2^{nd} cycle, where it was performed, is very close to 100% for all cells except two (B7-2, E10-1) ranging from 98.8% to 100.7%. The charge time for the 2^{nd} cycle is also relatively uniform, ranging only from 6:34 hours to 13:33.

The results of the self-discharge testing, including the discharge after self-discharge, are included in table 10. Again, each cell condition is the average of two cells.

**TABLE 10**

| **Cell** | **Self Discharge Day 1** | **Self Discharge Day 2** | **Self Discharge Loss V** | **Self Discharge Residual mAh** | **Self Discharge Loss mAh** | **Final Discharge capacity** |
|---|---|---|---|---|---|---|
| **B1** | 3.291 | 3.249 | 0.042 | 13.7 | 4.3 | 58.0 |
| **B2** | 3.290 | 3.239 | 0.051 | 11.8 | 6.2 | 57.0 |
| **B3** | 3,300 | 3.254 | 0.046 | 12.5 | 5.5 | 57.3 |
| **B4** | 3.295 | 3.248 | 0.047 | 12.4 | 5.6 | 60.6 |
| **B5** | 3.299 | 3.262 | 0.037 | 15.1 | 2.9 | 62.1 |
| **B6** | 3.290 | 3.248 | 0.043 | 12.1 | 5.9 | 63.5 |
| **B7** | 3.295 | 3.256 | 0.039 | 13.8 | 4.2 | 61.8 |
| **B8** | 3.295 | 3.254 | 0.042 | 13.4 | 4.6 | 62.2 |
| **B9** | 3.292 | 3.251 | 0.041 | 12.6 | 5.4 | 66.3 |
| **B1** | 3.282 | 3.246 | 0.037 | 12.3 | 5.7 | 61.6 |
| **B1** | 3.280 | 3.227 | 0.053 | 10.3 | 7.7 | 63.3 |
| **B1** | 3.287 | 3.249 | 0.039 | 12.1 | 5.9 | 55.1 |

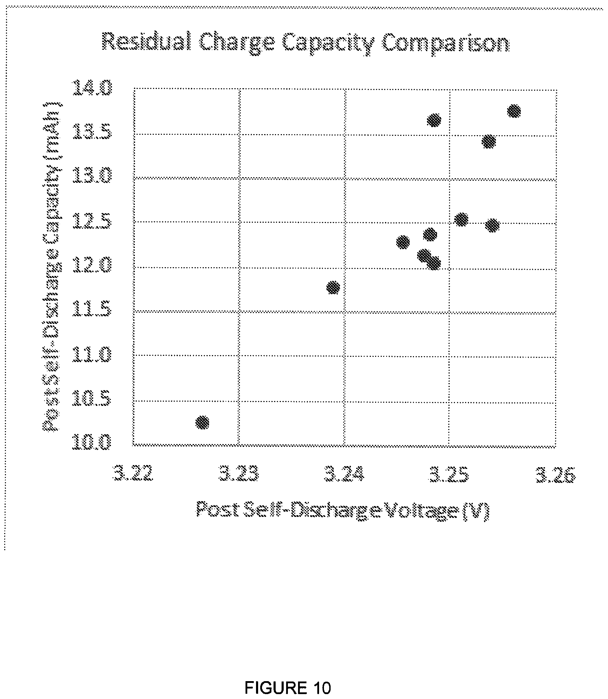

Again, a few observations can be made. The range of self-discharge loss, both in voltage and in capacity, is quite high. For voltage, it ranges from a loss of 37 mV to 86 mV, and in capacity it ranges from 2.9 mAh to 7.7 mAh. There is good correlation between the final self-discharge voltage on self-discharge and the loss in capacity on self-discharge (see **FIG.10**). The range of final discharge capacity is high, but the correlation with process parameters is only slight. There is likely high experimental error here due both to the small size of the electrodes and the potential for misalignment. There is not a high correlation between pairs, with an average variation in pairs of greater than 2 mAh.

### Data Analysis: Prior Art Cell Manufacturer B

The data was averaged among the same groups as for prior art Manufacturer B. The averages obtained for each measurement are shown below in Table 11.

**TABLE 11**

| | **C1 Efficiency** | **C1 Time** | **C2 Efficiency** | **C2 Time** | **Self Discharge Day 1** | **Self Discharge Day 14** | **Self Discharge Loss V** | **Self Discharge Loss mAh** | **Final Charge capacity** | **Final Discharge Capacity** |
|---|---|---|---|---|---|---|---|---|---|---|
| **Drying Temp** | | | | | | | | | | |
| 110 C | 57% | 21:31:50 | 87.3% | 9:43 | 3.288 | 3.247 | 0.041 | 5.6 | 61.3 | 60.3 |
| 120 C | 57% | 16:40:00 | 100.0% | 7:02 | 3.310 | 3.220 | 0.091 | 6.4 | 60.2 | 59.1 |

| **CC Rate** | | | | | | | | | | |
|---|---|---|---|---|---|---|---|---|---|---|
| C/6 | 65% | 17:49:37 | 94% | 9:00 | 3.291 | 3.249 | 0.037 | 5.1 | 61.0 | 59.9 |
| C/3 | 55% | 16:49:45 | 88% | 8:27 | 3.294 | 3.190 | 0.10 | 7.1 | 61.8 | 60.8 |

| **CV Cutoff** | | | | | | | | | | |
|---|---|---|---|---|---|---|---|---|---|---|
| C/60 | 47% | 23:55:15 | 88% | 10:21 | 3.293 | 3.252 | 0.041 | 4.3 | 60.6 | 59.6 |
| C/30 | 23% | 37:43:20 | 99% | 7:04 | 3.335 | 3.272 | 0.063 | 5.5 | 62.1 | 61.2 |

| **Voltage** | | | | | | | | | | |
|---|---|---|---|---|---|---|---|---|---|---|
| 3.6 | 54% | 23:22:30 | 89% | 10:18 | 3.294 | 3.254 | 0.030 | 4.3 | 60.6 | 59.6 |
| 3.4 | 83% | 12:31:45 | 99% | 7:37 | 3.289 | 3.248 | 0.041 | 5.9 | 59.3 | 57.8 |

| **Cycles** | | | | | | | | | | |
|---|---|---|---|---|---|---|---|---|---|---|
| 1 Cycle | 65% | 14:23:15 | | | 3.296 | 3.190 | 0.106 | 7.0 | 61.1 | 60.2 |
| 2 Cycles | 49% | 20:24:52 | 88% | 9:24 | 3.291 | 3.250 | 0.041 | 5.1 | 60.8 | 59.9 |

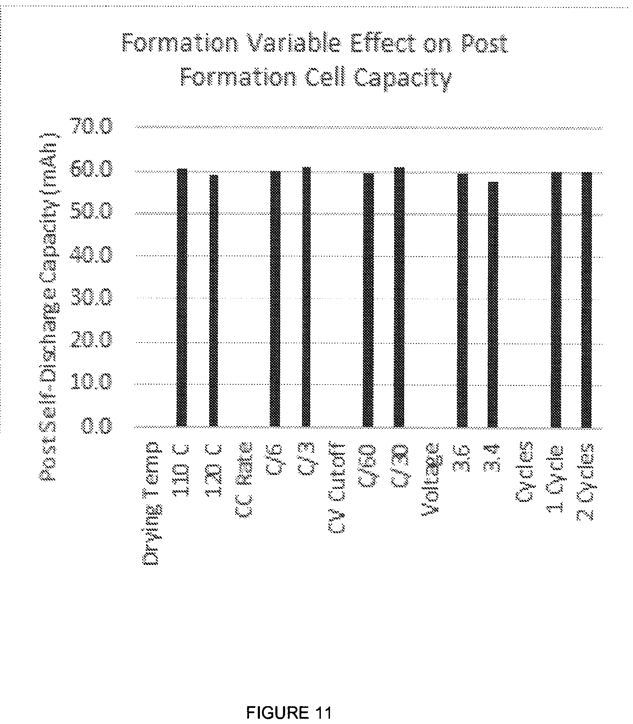

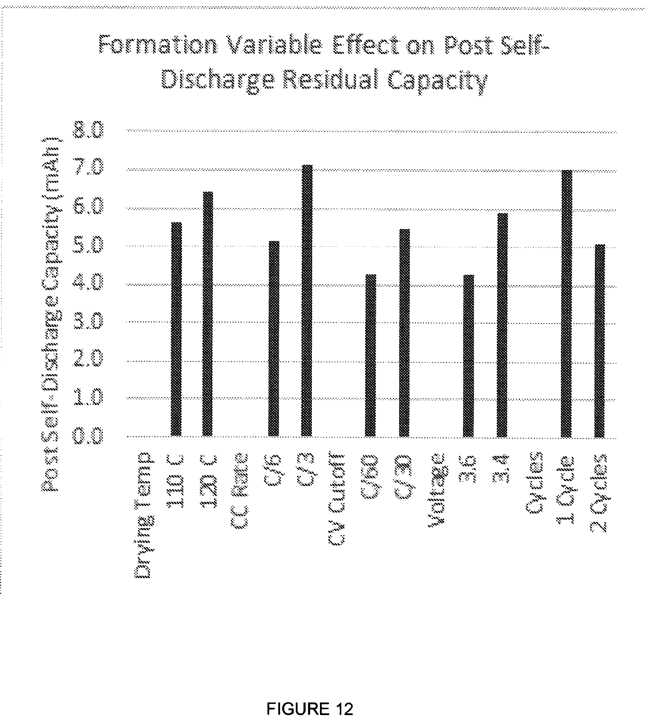

Looking at the data in the same was as for Manufacturer A, some conclusions can be drawn. The Final Discharge Capacity is very consistent, and really only affected by the charge voltage. These relations are shown in **FIG.11****.** The Self Discharge Loss (mAh) is affected positively (lower) by more variables as shown in **FIG.12****,** including lower drying temperature, lower constant current charging rate, lower constant current cutoff current, higher charging voltage, and more cycles. Again, these results support the conclusion that a slow charge to high voltage with a long soak at high voltage provides for a battery with superior properties.

Especially for self-discharge, the correlations are the same as for Manufacturer A except for the number of cycles, which for Manufacturer A appeared to be an experimental anomaly due to an inconsistency in the first cycle coulombic efficiency between cells with one cycle formation versus two cycle. The cells for Manufacturer B did not have this inconsistency, and so the conclusion is the more cycles will reduce the self-discharge, which agrees with the general behavior that has been seen in multiple other cell build.

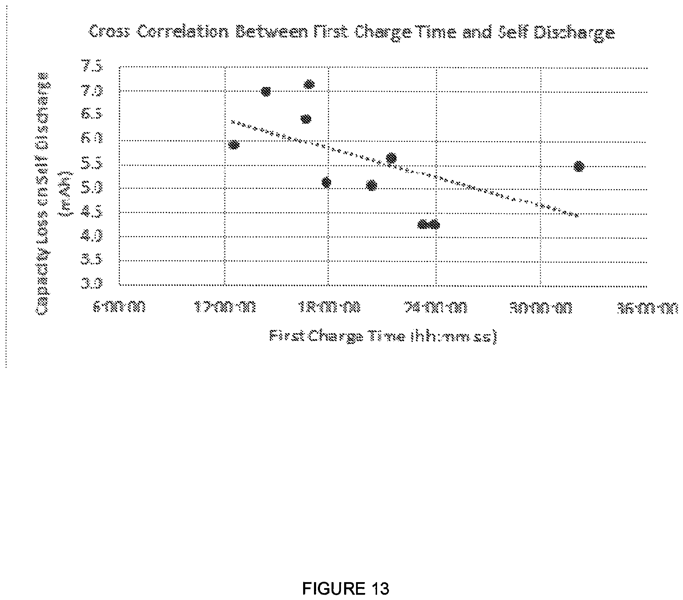

As with Manufacturer A, there is one significant cross correlation, between the C1 Time and the Self Discharge Loss, which is shown below in **FIG. 13****.** As can be seen, it appears there is a strong correlation with using longer initial charge times to reduce the self-discharge at the end of formation, independent of the variables used to achieve the higher charge time.

Several strong correlations were shown between the formation parameters and the self-discharge and cell capacity achieved. While every cell should be optimized on its own and these results may not correlate with other cells, based on these results, the following recommendations will likely result in an improvement in cell capacity of up to 5% and a reduction of self-discharge rates of up to 50%.

Based on the results, it is recommended that, in specific embodiments of the present invention, the Dreamweaver Silver separator is dried at a maximum separator drying temperature of 110 degrees Celsius. It is further recommended that the formation of the SEI layer utilize a low initial charge cycle current at a maximum of C/6 up until the cell is partially charged and a higher charge at C/6after the cell is partially charged. It is further recommended that the formation proceed to at least 3.6 volts, or even as high as 4.0 volts or higher for some cathode systems. It is further recommended that the formation include a high voltage CV (constant voltage) charge either until a low current is achieved (less than C/60) or for a specified period of time (greater than six hours).

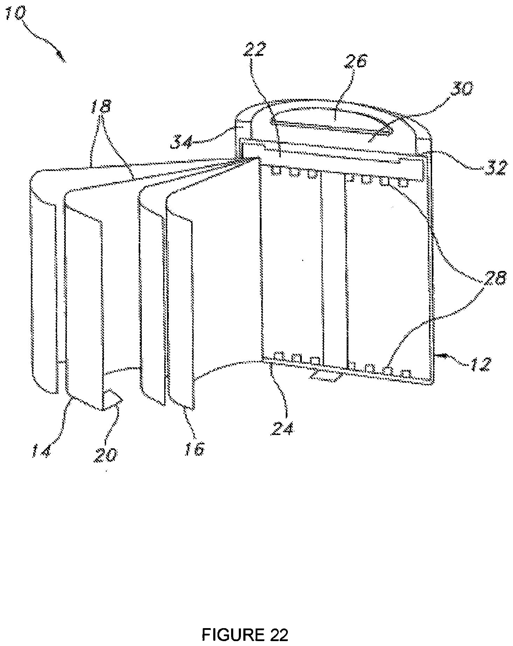

**FIG. 22** shows the typical battery 10 structure with the outside housing 12 which includes all of the other components and being securely sealed to prevent environmental contamination into the cell as well as any leakage of electrolyte from the cell. An anode 14 is thus supplied in tandem with a cathode 16, with at least one battery separator 18 between the two. An electrolyte 20 is added to the cell prior to sealing to provide the necessary ion generation. The separator 18 thus aids in preventing contact of the anode 14 and cathode 16, as well as to allow for selected ion migration from the electrolyte 20 therethrough. The general format of a battery cell follows this structural description, albeit with differing structures sizes and configurations for each internal component, depending on the size and structure of the battery cell itself. In this situation, button battery of substantially circular solid components were produced for proper testing of separator effectiveness within such a cell.

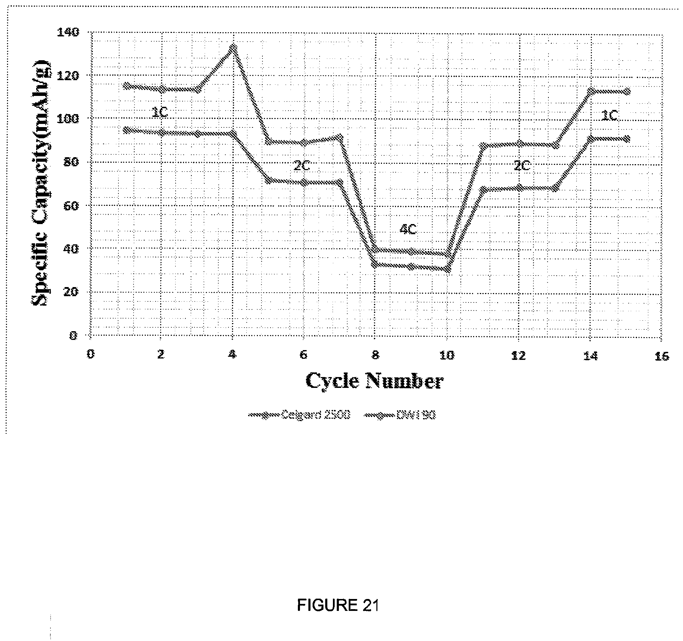

To that end, coin cells were then produced to allow teardown and measurement of the separator after teardown. CR2032 coin cells were assembled. LFP and graphite electrode were the commercial electrodes used from Manufacturer B above, and 1.0 M LiPF₆ solution in a mixture of ethylene carbonate and diethyl carbonate (EC/DEC, 1:1 in volume) was used as electrolyte. Prior art CELGARD 2400 separator was used after drying at 60° C. For the DWI Silver Separator of the present invention, cells were made with non-dried separator as well as separator dried for 4 hours at 90° C and 120 ° C. After cell assembly, the cells were kept under vacuum at 50 ° C overnight for stabilization. After stabilization, cells were cycled (CCCV) on Toyo battery cycler. Initially, cells were cycled for 2 formation cycles, followed by rate capability testing at 1C, 2C, 4C, 2C (3 cycles each). After rate capability, cells were cycled for 50 cycles at 1C rate. The results of these cycle tests are shown as charge discharge curves in **FIG. 19**, as cycle life in **FIG. 20**, and as rate capability in **FIG. 21****.**

As shown in FIG. 20, such a battery with a pre-formed SEI layer therein with an enmeshed microfiber/nanofiber separator (DWI Silver 25, for example) present throughout such SEI formation and having an ethylene carbonate/diethylene carbonate and LiPF6 electrolyte therein, exhibits, after cycling a specific capacity of at least 38 m mAh/g throughout the 1C, 2C, 4C, 2C, and 1C cycles. In comparison, the prior art CELGARD 2500 separator type battery (with the same electrolyte and overall construction) exhibited far lower specific capacity measures over the same cycles. Likewise, **FIG. 21** shows a different measurement of specific capacity for the inventive battery and the comparative CELGARD type. Over 50 continuous cycles form initial charge, the pre-formed SEI layer batteries exhibited starkly different results. The inventive battery, having the same electrolyte as above, exhibited a specific capacity in excess of 100 mAh/g over such a continuous 50 cycles. Noticeably, the comparative battery was well below such a number, indicating greater reliability for the inventive type, presumably due to the effective pre-formation of an SEI layer over the anode as well as the battery separator.

To show the overall results of the pre-formed SEI layer within the subject batteries (inventive and comparative), certain examples were then effectively subject to teardown to determine the overall SEI layer coverage therein and thereon the separators themselves. Thus, after completion of cycling, example coin cells were torndown in an Argon-filled glove box and were dried under vacuum before SEM and EDX analysis. Samples for SEM and EDX analysis were prepared and coated with gold/palladium. For SEM analysis Carl Zeiss Auriga-BU FIB FESEM Microscope was used. For EDX analysis the Scanning Electron Microscope with energy Dispersive Spectrometer (Bruker Nano with XFlash Detector 5030) was used. EDX performed on the separators resulted in the atomic peaks as shown in Table 12.

**TABLE 12**

| **Element** | **CELGARD 2500** | **DWI Silver 25** |
|---|---|---|
| Carbon | 88.05 | 68.48 |
| Oxygen | 6.81 | 16.30 |
| Fluorine | 3.99 | 12.23 |
| Phosphorus | 1.15 | 3.00 |

These measurements show that the SEI layer is far more developed on the inventive separator than on the comparative film separator. A measurement of a Carbon atomic peak of at most 70, in this instance, an Oxygen atomic peak of at least 8, a Fluorine atomic peak of at least 5, and a Phosphorus atomic peak of at least 1.5, is thus of importance in this situation to provide a mature Sei layer within the battery. Such an SEI layer accords, as noted above, greater reliability for initial charge and cycling, particularly within the layer present on the anode and the separator together. Thus with such an effective SEI layer result, and a separator that lends itself to such coverage during cycling and initial charging, at least, the batteries made therefrom exhibit, as noted above, excellent initial capacity, providing, as well, greater reliability during use and potentially longer shelf-life while awaiting such an initial charge within a subject device (cell phone, etc., as examples).

An example method comprises the steps of assembling a cell including an interior volume comprising an anode, a cathode, and a separator, filling the interior volume of the cell with an electrolyte; connecting the anode and the cathode to a charging device; charging the cell at a rate less than equal to c/6 until the cell reaches a voltage capacity; and charging the cell at a voltage higher than a set voltage for greater than six hours. The invention further encompasses such a method wherein the voltage for termination of the low rate charging step is greater than or equal to 3.4 volts. The invention further encompasses such a method wherein the voltage for the high voltage charging step is greater than 3.4 volts.

Embodiments may include specific parameters that provide a sufficient solid electrolyte interface layer, such that the current applied is not faster than C/4, not faster than C/6, or not faster than C/10 (with C being the rate required to charge the cell to full capacity in one hour). Additionally, the use of voltage is very important, such that specific parameters provide a sufficient solid electrolyte interface layer, such that the voltage is achieved at greater than 3.3 volts, 3.6 volts, or 3.9 volts. Furthermore, the use of current to keep the voltage above 3.6 volts, such that a sufficient amount of time to apply the current is carried out at a time greater than six hours, preferably at a time greater than 9 hours, more preferably at a time greater than 12 hours. This process allows the SEI layer to form at a rate that is limited by current (not the pore size of the separator) and also allows a slow process at high voltage which will continue to fill in any gaps and give a uniform, complete coverage of the anode. As noted above, such anode coverage is of importance for overall battery reliability (and extended shelf-life, presumably, prior to initial charge).

While this disclosure has been particularly shown and described with reference to preferred embodiments thereof and to the accompanying drawings, it will be understood by those skilled in the art that various changes in form and details may be made therein without departing from the spirit of this disclosure. Therefore, the scope of the disclosure is defined not by the detailed description but by the appended claims.

## Claims

1. A lithium ion battery comprising a cathode, an anode, a separator, and a liquid electrolyte therein, **characterised in that** a solid electrolyte interface (SEI) layer is provided on the separator thereof, the SEI layer formed on the separator after an initial charge following manufacture of the battery, wherein the SEI layer has a SEI measurement in atomic peaks using Energy Dispersive X-Ray Spectroscopy (EDX) under a scanning electron microscope with an Energy Dispersive Spectrometer of at most 70% Carbon, at least 8% Oxygen, at least 5% Fluorine, and at least 1.5% Phosphorus, and wherein the battery exhibits a specific capacity of at least 38 mAH/g for at least 16 cycles subsequent to the initial charge.

2. The lithium ion battery of claim 1 wherein the separator comprises randomly oriented fibers, wherein at least one of the randomly oriented fibers comprises a largest dimension perpendicular to the length of the fiber of less than 1.0 µm.

3. The lithium ion battery of any one of claims 1 to 2 wherein the separator comprises enmeshed micro fibers, having a length greater than 0.5mm and less than 50mm, and nanofibers, having a diameter of 500-700nm.

4. The lithium ion battery of any one of claims 1 to 3 wherein the separator exhibits a mean flow pore size greater than or equal to 0.1 µm as tested according to ASTME-1294.

5. The lithium ion battery of any one of claims 1 to 4 wherein the SEI layer can be seen under SEM micrographs to comprise regions where substantially all of the pores present in SEMs of the initial separator have been filled.

6. The lithium ion battery of any one of claims 1 to 5 wherein the SEI layer comprises regions which can be observed by energy dispersive x-ray spectroscopy (EDS) to have phosphorous levels of greater than 1.5%.

7. The lithium ion battery of any one of claims 1 to 6 wherein the SEI layer comprises regions which can be observed by energy dispersive x-ray spectroscopy (EDS) to have fluorine levels of greater than 5%.

8. The lithium ion battery of claim 1 wherein the 16 cycles are from 1C, 2C, 4C, 2C, and 1C, subsequent to the initial charge.

9. The lithium ion battery of claim 8 wherein the separator exhibits a mean flow pore size greater than or equal to 0.1 µm.

10. Process for the manufacture of the lithium ion battery of claim 1 comprising the steps of
assembling a cell including an interior volume comprising the anode, the cathode, and the separator;
filling the interior volume of the cell with an electrolyte;
connecting the anode and the cathode to a charging device;
**characterised in that** the method further includes the steps of charging the cell at a low C-rate until the cell reaches a termination voltage, the C-rate being no faster than C/10, not faster than C/6 or not faster than C/4, wherein C being a rate required to charge the cell to full capacity in one hour;
charging the cell to form the SEI layer at a voltage for an amount of time, the voltage being greater than 3.3 volts, 3.6 volts or 3.9 volts; and
charging the cell with a current for a predetermined amount of time to maintain the voltage; and
forming the SEI layer on the separator and on the anode at a rate limited by the current so that the SEI layer fills gaps present in the anode and/or pores present in the separator, thereby providing complete coverage of the separator and the anode with the SEI layer.

11. The process according to claim 10 further comprising the steps of
drying the separator for a predetermined drying time prior to assembling the cell; and drying the cell for a predetermined cell drying time prior to filling the interior volume of the cell with the electrolyte.

## Patentansprüche

1. Lithium-Ionen-Batterie, die eine Kathode, eine Anode, einen Separator und einen flüssigen Elektrolyten darin beinhaltet, **dadurch gekennzeichnet, dass** auf ihrem Separator eine Festelektrolyt-Grenzflächen- (Solid Electrolyte Interface, SEI) -Schicht bereitgestellt ist, wobei die SEI-Schicht nach einem ersten Laden nach der Herstellung der Batterie auf dem Separator gebildet wird, wobei die SEI-Schicht eine SEI-Messung in Atom-Peaks unter Verwendung von energiedispersiver Röntgenspektroskopie (EDX) unter einem Rasterelektronenmikroskop mit einem energiedispersiven Spektrometer von höchstens 70 % Kohlenstoff, wenigstens 8 % Sauerstoff, wenigstens 5 % Fluor und wenigstens 1,5 % Phosphor hat und wobei die Batterie eine spezifische Kapazität von mindestens 38 mAH/g für mindestens 16 Zyklen nach dem ersten Laden aufweist.

2. Lithium-Ionen-Batterie nach Anspruch 1, wobei der Separator zufällig orientierte Fasern beinhaltet, wobei wenigstens eine der zufällig orientierten Fasern eine größte Abmessung, die zur Länge der Faser lotrecht ist, von weniger als 1,0 µm beinhaltet.

3. Lithium-Ionen-Batterie nach einem der Ansprüche 1 bis 2, wobei der Separator vernetzte Mikrofasern mit einer Länge von mehr als 0,5 mm und weniger als 50 mm und Nanofasern mit einem Durchmesser von 500 - 700 nm aufweist.

4. Lithium-Ionen-Batterie nach einem der Ansprüche 1 bis 3, wobei der Separator eine Mean Flow-Porengröße von größer oder gleich 0,1 µm, gemäß ASTME-1294 getestet, aufweist.

5. Lithium-Ionen-Batterie nach einem der Ansprüche 1 bis 4, wobei die SEI-Schicht in REM-Aufnahmen Regionen aufweist, in denen im Wesentlichen alle der in REM-Aufnahmen des anfänglichen Separators vorhandenen Poren gefüllt wurden.

6. Lithium-Ionen-Batterie nach einem der Ansprüche 1 bis 5, wobei die SEI-Schicht Regionen aufweist, in denen mittels energiedispersiver Röntgenspektroskopie (EDS) ein Phosphorgehalt von mehr als 1,5 % beobachtet werden kann.

7. Lithium-Ionen-Batterie nach einem der Ansprüche 1 bis 6, wobei die SEI-Schicht Regionen aufweist, in denen mittels energiedispersiver Röntgenspektroskopie (EDS) ein Fluorgehalt von mehr als 5 % beobachtet werden kann.

8. Lithium-Ionen-Batterie nach Anspruch 1, wobei die 16 Zyklen von 1C, 2C, 4C, 2C und 1C nach dem ersten Laden sind.

9. Lithium-Ionen-Batterie nach Anspruch 8, wobei der Separator eine Mean Flow-Porengröße von größer oder gleich 0,1 µm aufweist.

10. Prozess für die Herstellung der Lithium-Ionen-Batterie nach Anspruch 1, der die folgenden Schritte beinhaltet:
Zusammenbauen einer Zelle mit einem Innenvolumen, das die Anode, die Kathode und den Separator beinhaltet,
Füllen des Innenvolumens der Zelle mit einem Elektrolyten;
Verbinden der Anode und der Kathode mit einer Ladevorrichtung;
**dadurch gekennzeichnet, dass** das Verfahren ferner die folgenden Schritte umfasst: Laden der Zelle mit einer niedrigen C-Rate, bis die Zelle eine Schlussspannung erreicht, wobei die C-Rate nicht schneller als C/10, nicht schneller als C/6 oder nicht schneller als C/4 ist, wobei C eine Rate ist, die erforderlich ist, um eine Zelle in einer Stunde auf volle Kapazität zu laden;
Laden der Zelle zum Bilden der SEI-Schicht bei einer Spannung für eine Dauer, wobei die Spannung größer als 3,3 Volt, 3,6 Volt oder 3,9 Volt ist, und
Laden der Zelle mit einem Strom für eine vorbestimmte Dauer zum Halten der Spannung; und
Bilden der SEI-Schicht auf dem Separator und auf der Anode mit einer durch den Strom begrenzten Rate, so dass die SEI-Schicht in der Anode vorhandene Lücken und/oder im Separator vorhandene Poren ausfüllt, wodurch für eine vollständige Bedeckung des Separators und der Anode mit der SEI-Schicht gesorgt wird.

11. Prozess nach Anspruch 10, der ferner die folgenden Schritte beinhaltet:
Trocknen des Separators für eine vorbestimmte Trocknungszeit vor Zusammenbauen der Zelle; und Trocknen der Zelle für eine vorbestimmte Zellentrocknungszeit vor Füllen des Innenvolumens der Zelle mit dem Elektrolyten.

## Revendications

1. Batterie au lithium-ion comprenant une cathode, une anode, un séparateur, et un électrolyte liquide dans celle-ci, **caractérisée en ce qu'**une couche d'interface d'électrolyte solide (SEI) est prévue sur le séparateur de celle-ci, la couche de SEI étant formée sur le séparateur après une charge initiale à la suite de la fabrication de la batterie, où la couche de SEI présente une mesure de SEI en pics atomiques grâce à l'utilisation de la spectroscopie à rayons X et énergie dispersive (EDX) sous un microscope à balayage électronique à l'aide d'un spectromètre à énergie dispersive d'au plus 70 % de carbone, d'au moins 8 % d'oxygène, d'au moins 5 % de fluor, et d'au moins 1,5 % de phosphore, et où la batterie présente une capacité spécifique d'au moins 38 mAh/g pendant au moins 16 cycles subséquemment à la charge initiale.

2. Batterie au lithium-ion de la revendication 1 où le séparateur comprend des fibres à orientation aléatoire, où au moins une des fibres à orientation aléatoire comprend la dimension la plus grande perpendiculairement à la longueur de la fibre de moins de 1,0 µm.

3. Batterie au lithium-ion de n'importe laquelle des revendications 1 à 2 où le séparateur comprend des microfibres emmêlées, ayant une longueur supérieure à 0,5 mm et inférieure à 50 mm, et des nanofibres ayant un diamètre de 500-700 nm.

4. Batterie au lithium-ion de n'importe laquelle des revendications 1 à 3 où le séparateur présente une taille moyenne des pores d'écoulement supérieure à ou égale à 0,1 µm comme testée en conformité avec la norme ASTME-1294.

5. Batterie au lithium-ion de n'importe laquelle des revendications 1 à 4 où la couche de SEI peut être vue sous des micrographes SEM pour comprendre des régions dans lesquelles substantiellement tous les pores présents dans les SEM du séparateur initial ont été remplies.

6. Batterie au lithium-ion de n'importe laquelle des revendications 1 à 5 où la couche de SEI comprend des régions pouvant être observées par la spectroscopie à rayons X et énergie dispersive (EDS) pour savoir si elles ont des niveaux de phosphore supérieurs à 1,5 %.

7. Batterie au lithium-ion de n'importe laquelle des revendications 1 à 6 où la couche de SEI comprend des régions pouvant être observées par la spectroscopie à rayons X et énergie dispersive (EDS) pour savoir si elles ont des niveaux de fluor supérieurs à 5 %.

8. Batterie au lithium-ion de la revendication 1 où les 16 cycles sont de 1C, 2C, 4C, 2C, et 1C, subséquemment à la charge initiale.

9. Batterie au lithium-ion de la revendication 8 où le séparateur présente une taille moyenne des pores d'écoulement supérieure à ou égale à 0,1 µm.

10. Procédé servant à fabriquer la batterie au lithium-ion de la revendication 1 comprenant les étapes consistant à :
assembler une cellule incluant un volume intérieur comprenant l'anode, la cathode, et le séparateur ;
remplir le volume intérieur de la cellule avec un électrolyte ;
connecter l'anode et la cathode à un dispositif de charge ;
**caractérisé en ce que** le procédé inclut en outre les étapes consistant à charger la cellule à une faible cadence C jusqu'à ce que la cellule atteigne une tension de terminaison, la cadence C n'étant pas plus rapide que C/10, pas plus rapide que C/6 ou pas plus rapide que C/4, où C représente une cadence requise pour charger la cellule jusqu'à pleine capacité en une heure ;
charger la cellule pour former la couche de SEI à une tension pendant un certain laps de temps, la tension étant plus grande que 3,3 Volts, 3,6 Volts ou 3,9 Volts ; et
charger la cellule avec un courant pendant un laps de temps prédéterminé afin de maintenir la tension ; et
former la couche de SEI sur le séparateur et sur l'anode à une cadence limitée par le courant de sorte que la couche de SEI comble les intervalles présents dans l'anode et/ou les pores présents dans le séparateur, ce qui permet d'obtenir une couverture complète du séparateur et de l'anode avec la couche de SEI.

11. Procédé selon la revendication 10 comprenant en outre les étapes consistant à :
faire sécher le séparateur pendant un temps de séchage prédéterminé avant l'assemblage de la cellule ;
et faire sécher la cellule pendant un temps de séchage prédéterminé de cellule avant le remplissage du volume intérieur de la cellule avec l'électrolyte.
